# EUROPEAN PATENT APPLICATION

(11) **EP 2 927 796 A1**
(43) Date of publication of application: **07.10.2015**
(21) Application number: 15162655.3
(22) Date of filing: 07.04.2015
(51) Int. Cl.: G06F 3/0489, G06F 9/44, G06F 3/01, G06F 3/0488

(54) **USER INTERFACE METHOD AND APPARATUS OF ELECTRONIC DEVICE FOR RECEIVING USER INPUT**

(30) Priority: 04.04.2014 KR 20140040276
(71) Applicant: Samsung Electronics Co., Ltd, Gyeonggi-do 443-742 (KR)
(72) Inventor: Lee, Yohan, 443-742 Gyeonggi-do (KR); Kim, Mooyoung, 443-742 Gyeonggi-do (KR); Hwang, Hochul, 443-742 Gyeonggi-do (KR)
(74) Representative: Gover, Richard Paul

(57) **Abstract**

A method and electronic device for providing a user interface corresponding to a user input in an electronic device. The method includes displaying at least one first user interface corresponding to a first user input mode and displaying, when a user input of a second user input mode is detected, at least one input guide for executing a function corresponding to the at least one first user interface in the second user input mode.

## Description

### BACKGROUND

### 1. Field of the Invention

The present disclosure relates generally to a method and apparatus for providing different types of user interfaces adaptively to the user input mode for use in an electronic device, and more particularly, to a user interface adaptive to an input mode of an electronic device supporting two or more input modes.

### 2. Description of the Related Art

With the rapid advance of electronic technology, various portable devices have been developed, and it is not unusual for a person to carry several portable electronic devices. Examples of a portable device include a mobile phone, a smartphone, a tablet computer, a laptop computer, an electronic watch, an electronic dictionary, a Moving Picture Experts Group Audio Layer 3 (MP3) player, a Compact Disc (CD) player, a Digital Video Disc (DVD) player, and a portable game console.

In addition to portable devices, various types of home electronic devices (such as a smart television, a personal computer, and a home security system) are used for home automation. Most electronic devices are equipped with a touch input interface such as a touchscreen. The touchscreen or the touch input interface is characterized in that a display module displays various types of objects such as characters, numbers, and emoticons to which a user makes a touch gesture (e.g., a tap gesture and a drag and drop gesture) to input a certain execution command.

Since an electronic device that only allows a touch-based input is restrictive and inconvenient for a user, various types of supplementary input modes were developed to compensate for the drawbacks of the touch-based input. Examples of the supplementary input modes include a hovering input mode, a motion or gesture recognition input mode, and a pupil recognition input mode.

Although various types of input modes exist in addition to the touch-based input mode, the electronic devices do not provide the user with any use or manipulation method suited for the respective input modes. This is because there is no method of notifying the user of the actions which the electronic device can recognize intuitively when the input mode is changed.

Typically, an electronic device supporting two or more input modes is provided with a thick manual, for guiding the user to practice the various input modes. In order to use the various input modes freely, the user has to memorize the input actions for the respective input modes or relinquish the use of the functions.

If such supplementary functions provided by the electronic device are useless to the user, this means that development costs are wasted and user inconvenience is maintained.

### SUMMARY

The present disclosure has been made to address the above-mentioned problems and disadvantages, and to provide at least the advantages described below. Accordingly, an aspect of the present disclosure provides a user interface adaptive to an input mode of an electronic device supporting two or more input modes.

Another aspect of the present disclosure provides a method and an apparatus for allowing a user to use multiple different input modes supported in an electronic device intuitively.

Another aspect of the present disclosure provides a user interface that is capable of allowing a user to recognize intuitively in an electronic device supporting two or more input modes.

Another aspect of the present disclosure provides a user interface that is capable of being implemented easily in an electronic device supporting two or more input modes.

Another aspect of the present disclosure provides a user interface that is capable of operating adaptively to an input mode in an electronic device supporting two or more input modes.

Another aspect of the present disclosure provides a method and apparatus for detecting a current input mode and displaying an interface corresponding to a detected input mode automatically.

In accordance with an aspect of the present disclosure, a method of providing a user interface corresponding to a user input in an electronic device is provided. The method includes displaying at least one first user interface corresponding to a first user input mode and displaying, when a user input of a second user input mode is detected, at least one input guide for executing a function corresponding to the at least one first user interface in the second user input mode.

In accordance with another aspect of the present disclosure, an electronic device for providing a user interface corresponding to a user input is provided. The electronic device includes a user input module configured to receive a user input in a first user input mode and a second user input mode, a display module configured to display at least one first user interface corresponding to the first user input mode and at least one input guide corresponding to a second user input mode, a memory configured to store the at least one first user interface, the at least one input guide, and an operation program of the electronic device, and a processor configured to control the display module to display, when a user input of a second user input mode is detected in a state where the first user input mode is displayed on a screen of the display module, the at least one input guide for executing a function corresponding to the at least one first user interface in the second user input mode.

### BRIEF DESCRIPTION OF THE DRAWINGS

The above and other aspects, features, and advantages of the present disclosure will be more apparent from the following detailed description, taken in conjunction with the accompanying drawings, in which:
FIG. 1 is a block diagram illustrating a configuration of an electronic device according to an embodiment of the present disclosure;
FIG. 2 is a block diagram illustrating a configuration of hardware according to an embodiment of the present disclosure;
FIG. 3 is a block diagram illustrating a configuration of a programing module according to an embodiment of the present disclosure;
FIG. 4 is a flowchart illustrating a method of providing a user interface adaptively to a user input to an electronic device according to an embodiment of the present disclosure;
FIGs. 5A and 5B are diagrams illustrating operations of a first user interface according to an embodiment of the present disclosure;
FIGs. 6A to 6D are diagrams illustrating operations of a second user interface according to an embodiment of the present disclosure;
FIGs. 7A and 7B are diagrams illustrating operations of the second user interface in a second user input mode according to an embodiment of the present disclosure;
FIGs. 8A to 8C are diagrams illustrating the second user interface supporting four gestures according to an embodiment of the present disclosure; and
FIGs. 9A to 9D are diagrams illustrating operations of the second user interface with a plurality of selectable items in the second input mode according to an embodiment of the present disclosure.

### DETAILED DESCRIPTION OF EMBODIMENTS OF THE PRESENT INVENTION

Embodiments of the present disclosure are described below in detail with reference to the accompanying drawings. Various changes may be made to the present disclosure, and the present disclosure may have various forms, such that certain embodiments are illustrated in the accompanying drawings and described below in detail. However, an embodiment of the present disclosure is not intended to limit the present disclosure to the disclosed embodiment and it should be understood that the present disclosure includes all changes, equivalents, and substitutes within the scope and spirit of the present disclosure. Throughout the accompanying drawings, like reference numerals refer to like components.

The terms used in the following description and claims are not limited to their dictionary meanings, but, are merely used to facilitate a clear and consistent understanding of the present disclosure. Accordingly, it should be apparent to those skilled in the art that the following description of various embodiments of the present disclosure is provided for illustration purposes only and not for the purpose of limiting the present disclosure as defined by the appended claims and their equivalents.

It is to be understood that the singular forms "a," "an," and "the" include plural referents unless the context clearly dictates otherwise. Thus, for example, a reference to "a component surface" includes a reference to one or more of such surfaces.

The expressions such as "include" and "may include" which may be used in the present disclosure denote the presence of the disclosed functions, operations, and constituent elements and do not limit one or more additional functions, operations, and constituent elements. In the present disclosure, the terms such as "include" and/or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

Furthermore, in the present disclosure, the expression "and/or" includes any and all combinations of the associated listed words. For example, the expression "A and/or B" may include A, B, or both A and B.

In the present disclosure, expressions including ordinal numbers, such as "first" and "second," etc., may modify various elements. However, such elements are not limited by the above expressions. For example, the above expressions do not limit the sequence and/or importance of the elements. The above expressions are used merely for the purpose of distinguishing an element from other elements. For example, a first user device and a second user device indicate different user devices although both of them are user devices. For example, a first element could be referred to as a second element, and similarly, a second element could be referred to as a first element without departing from the scope and spirit of the present disclosure.

In the case where a component is referred to as being "connected to" or "accessed by" another component, it should be understood that not only the component is directly connected to or accessed by the other component, but also there may exist another component between them. In the case where a component is referred to as being "directly connected to" or "directly accessed by" another component, it should be understood that there is no component therebetween. The terms used in the present disclosure are only used to describe various embodiments of the present disclosure, and are not intended to limit the present disclosure. As used herein, the singular forms are intended to include the plural forms as well, unless the context clearly indicates otherwise.

An electronic device according to the present disclosure may be a device including a communication function. For example, an electronic device may correspond to a combination of at least one of a smartphone, a tablet Personal Computer (PC), a mobile phone, a video phone, an e-book reader, a desktop PC, a laptop PC, a netbook computer, a Personal Digital Assistant (PDA), a Portable Multimedia Player (PMP), a digital audio player, a mobile medical device, an electronic bracelet, an electronic necklace, an electronic accessory, a camera, a wearable device, an electronic clock, a wrist watch, home appliances (for example, an air-conditioner, a vacuum, an oven, a microwave, a washing machine, an air cleaner, and the like), an artificial intelligence robot, a TeleVision (TV), a Digital Video Disk (DVD) player, an audio device, various medical devices (for example, an Magnetic Resonance Angiography (MRA) device, a Magnetic Resonance Imaging (MRI) device, a Computed Tomography (CT) device, a scanning machine, an ultrasonic wave device, or the like), a navigation device, a Global Positioning System (GPS) receiver, an Event Data Recorder (EDR), a Flight Data Recorder (FDR), a set-top box, a TV box (for example, Samsung HomeSync™, Apple TV™, or Google TV™), an electronic dictionary, a vehicle infotainment device, an electronic equipment for a ship (for example, navigation equipment for a ship, a gyrocompass, or the like), avionics, a security device, electronic clothes, an electronic key, a camcorder, game consoles, a Head-Mounted Display (HMD), a flat panel display device, an electronic frame, an electronic album, furniture or a portion of a building/structure that includes a communication function, an electronic board, an electronic signature receiving device, a projector, and the like. It is obvious to those skilled in the art that an electronic device according to the present disclosure is not limited to the aforementioned devices.

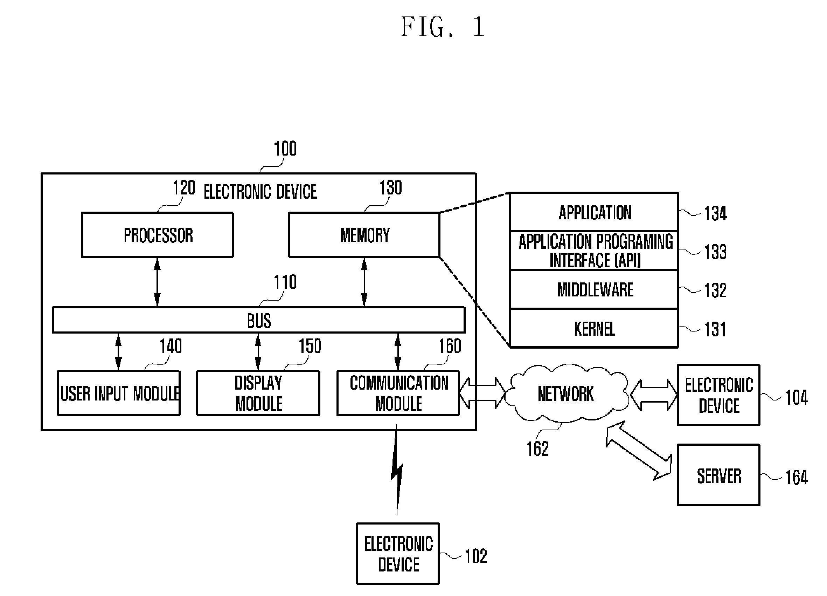

FIG. 1 is a block diagram illustrating a configuration of an electronic device according to an embodiment of the present disclosure.

Referring to FIG. 1, the electronic device 100 includes a bus 110, a processor 120, a memory 130, a user input module 140, a display module 150, a communication module 160, and other similar and/or suitable components.

The bus 110 is a circuit which interconnects the above-described elements and delivers a communication (e.g., a control message) between the above-described elements.

The processor 120 receives commands from the above-described other elements (e.g., the memory 130, the user input module 140, the display module 150, the communication module 160, etc.) through the bus 110, interprets the received commands, and executes a calculation or the processing of data according to the interpreted commands.

The memory 130 stores commands or data received from the processor 120 or other elements (e.g., the user input module 140, the display module 150, the communication module 160, etc.) or generated by the processor 120 or the other elements. The memory 130 includes programming modules, such as a kernel 131, middleware 132, an Application Programming Interface (API) 133, an application 134, and the like. Each of the above-described programming modules may be implemented in software, firmware, hardware, or a combination of two or more thereof.

The kernel 131 controls or manages system resources (e.g., the bus 110, the processor 120, the memory 130, etc.) used to execute operations or functions implemented by other programming modules (e.g., the middleware 132, the API 133, and the application 134). Also, the kernel 131 provides an interface capable of accessing and controlling or managing the individual elements of the electronic device 100 by using the middleware 132, the API 133, or the application 134.

The middleware 132 serves as a go between for the API 133 or the application 134 and the kernel 131 in such a manner that the API 133 or the application 134 communicates with the kernel 131 and exchanges data therewith. Also, in relation to work requests received from one or more application 134, the middleware 132, for example, performs load balancing of the work requests by using a method of assigning a priority, in which system resources (e.g., the bus 110, the processor 120, the memory 130, etc.) of the electronic device 100 can be used by at least one of the one or more application 134.

The API 133 is an interface through which the application 134 is capable of controlling a function provided by the kernel 131 or the middleware 132, and may include, for example, at least one interface or function for file control, window control, image processing, character control, or the like.

The user input module 140, for example, receives a command or data as input from a user, and delivers the received command or data to the processor 120 or the memory 130 through the bus 110. The display module 150 displays a video, an image, data, or the like to the user.

The communication module 160 establishes communication between another electronic device 102 and the electronic device 100. The communication module 160 may support a predetermined short-range communication protocol (e.g., Wireless Fidelity (Wi-Fi), BlueTooth (BT), and Near Field Communication (NFC)), or a predetermined network communication 162 (e.g., the Internet, a Local Area Network (LAN), a Wide Area Network (WAN), a telecommunication network, a cellular network, a satellite network, a Plain Old Telephone Service (POTS), or the like). Each of the electronic devices 102 and 104 may be a device which is identical (e.g., of an identical type) to or different (e.g., of a different type) from the electronic device 100. Further, the communication module 160 connects a communication between a server 164 and the electronic device 100 via the network 162.

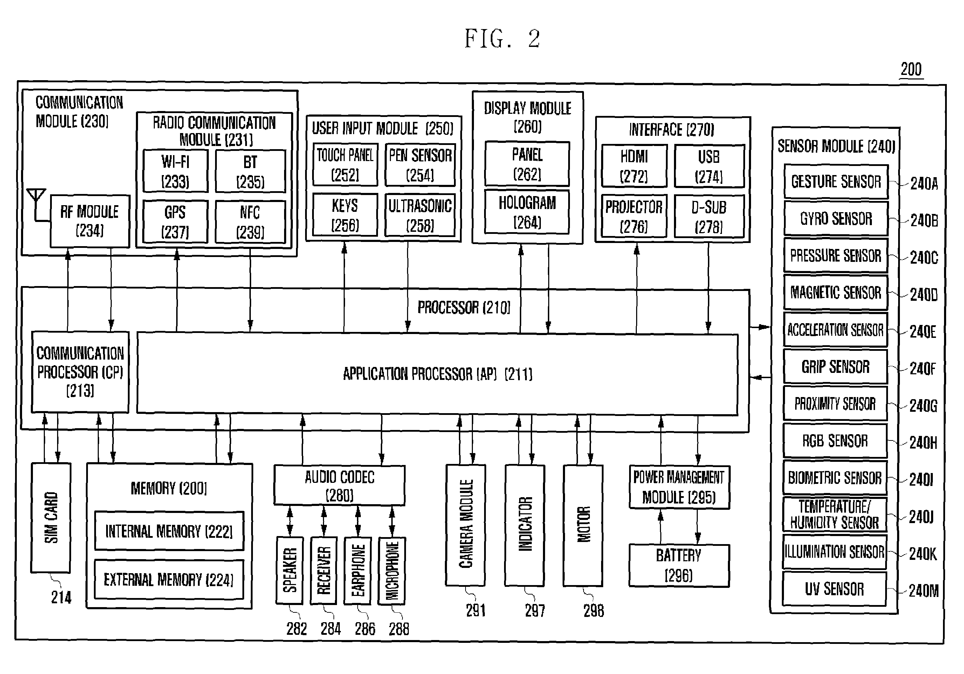

FIG. 2 is a block diagram illustrating a configuration of hardware 200 according to an embodiment of the present disclosure.

The hardware 200 may be, for example, the electronic device 100 illustrated in FIG. 1.

Referring to FIG. 2, the hardware 200 includes one or more processors 210, a Subscriber Identification Module (SIM) card 214, a memory 220, a communication module 230, a sensor module 240, a user input module 250, a display module 260, an interface 270, an audio coder/decoder (codec) 280, a camera module 291, a power management module 295, a battery 296, an indicator 297, a motor 298 and any other similar and/or suitable components.

The processor 210 (e.g., the processor 120) includes one or more Application Processors (APs) 211, or one or more Communication Processors (CPs) 213. The processor 210 may be, for example, the processor 120 illustrated in FIG. 1. The AP 211 and the CP 213 are illustrated as being included in the processor 210 in FIG. 2, but may be included in different Integrated Circuit (IC) packages, respectively. According to an embodiment of the present disclosure, the AP 211 and the CP 213 are included in one Integrated Circuit (IC) package.

The AP 211 executes an Operating System (OS) or an application program, and thereby controls multiple hardware or software elements connected to the AP 211 and performs processing of and arithmetic operations on various data including multimedia data. The AP 211 may be implemented by, for example, a System on Chip (SoC). According to an embodiment of the present disclosure, the processor 210 may further include a Graphics Processing Unit (GPU).

The CP 213 manages a data line and converts a communication protocol in the case of a communication between an electronic device (e.g., the electronic device 100) including the hardware 200 and different electronic devices connected to the electronic device through the network. The CP 213 may be implemented by, for example, an SoC. According to an embodiment of the present disclosure, the CP 213 performs at least some multimedia control functions. The CP 213, for example, distinguishes and authenticates a terminal in a communication network by using the SIM card 214. Also, the CP 213 may provide a user with services, such as a voice telephony call, a video telephony call, a text message, packet data, and the like.

Further, the CP 213 may control the transmission and reception of data by the communication module 230. In FIG. 2, the elements such as the CP 213, the power management module 295, the memory 220, and the like are illustrated as elements separate from the AP 211. However, according to an embodiment of the present disclosure, the AP 211 may include at least some (e.g., the CP 213) of the above-described elements.

According to an embodiment of the present disclosure, the AP 211 or the CP 213 loads, to a volatile memory, a command or data received from at least one of a non-volatile memory and other elements connected to each of the AP 211 and the CP 213, and processes the loaded command or data. Also, the AP 211 or the CP 213 stores, in a non-volatile memory, data received from or generated by at least one of the other elements.

The SIM card 214 is a card which is inserted into a slot formed in the electronic device 100. The SIM card 214 includes unique identification information (e.g., Integrated Circuit Card IDentifier (ICCID)) or subscriber information (e.g., International Mobile Subscriber Identity (IMSI)).

The memory 220 includes an internal memory 222 and an external memory 224. The memory 220 may be, for example, the memory 130 illustrated in FIG. 1. The internal memory 222 includes, for example, at least one of a volatile memory (e.g., a Dynamic Random Access memory (DRAM), a Static RAM (SRAM), a Synchronous Dynamic RAM (SDRAM), etc.), and a non-volatile memory (e.g., a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a Not AND (NAND) flash memory, a Not OR (NOR) flash memory, etc.). According to an embodiment of the present disclosure, the internal memory 222 may be in the form of a Solid State Drive (SSD). The external memory 224 may further include a flash drive, for example, a Compact Flash (CF) drive, a Secure Digital (SD) memory card, a Micro-Secure Digital (Micro-SD) memory card, a Mini-Secure Digital (Mini-SD) memory card, an extreme Digital (xD) memory card, a memory stick, or the like.

The communication module 230 includes a radio communication module 231 or a Radio Frequency (RF) module 234. The communication module 230 may be, for example, the communication module 160 illustrated in FIG. 1. The radio communication module 231 includes, for example, a Wi-Fi device 233, a BT device 235, a GPS device 237, or an NFC device 239. For example, the radio communication module 231 provides a wireless communication function by using a radio frequency. Additionally or alternatively, the radio communication module 231 includes a network interface (e.g., a LAN card), a modulator/demodulator (modem), or the like for connecting the hardware 200 to a network (e.g., the Internet, a LAN, a WAN, a telecommunication network, a cellular network, a satellite network, a POTS, or the like).

The RF module 234 is used for transmission and reception of data, for example, transmission and reception of RF signals or electronic call signals. The RF unit 234 may include, for example, a transceiver, a Power Amplifier Module (PAM), a frequency filter, a Low Noise Amplifier (LNA), or the like. Also, the RF module 234 may further include a component for transmitting and receiving electromagnetic waves in free space in a wireless communication, for example, a conductor, a conductive wire, or the like.

The sensor module 240 includes, for example, at least one of a gesture sensor 240A, a gyro sensor 240B, an pressure sensor 240C, a magnetic sensor 240D, an acceleration sensor 240E, a grip sensor 240F, a proximity sensor 240G, a Red, Green and Blue (RGB) sensor 240H, a biometric sensor 240I, a temperature/humidity sensor 240J, an illumination sensor 240K, and a Ultra Violet (UV) light sensor 240M. The sensor module 240 measures a physical quantity or senses an operating state of the electronic device 100, and converts the measured or sensed information to an electrical signal. Additionally/alternatively, the sensor module 240includes, for example, an Electronic nose (E-nose) sensor, an ElectroMyoGraphy (EMG) sensor, an ElectroEncephaloGram (EEG) sensor, an ElectroCardioGram (ECG) sensor, a fingerprint sensor, and the like. The sensor module 240 further includes a control circuit for controlling one or more sensors included therein.

The user input module 250 includes a touch panel 252, a pen sensor 254 (e.g., a digital pen sensor), keys 256, and an ultrasonic input unit 258. The user input module 250 may be, for example, the user input module 140 illustrated in FIG. 1. The touch panel 252 recognizes a touch input in at least one of, for example, a capacitive scheme, a resistive scheme, an infrared scheme, and an acoustic wave scheme. Also, the touch panel 252 further includes a controller. In the capacitive type, the touch panel 252 is capable of recognizing a proximity of a touch as well as a direct touch. The touch panel 252 may further include a tactile layer. In this case, the touch panel 252 provides a tactile response to the user.

The pen sensor 254 (e.g., a digital pen sensor), for example, may be implemented by using a method identical or similar to a method of receiving a touch input from the user, or by using a separate sheet for recognition. For example, a key pad or a touch key may be used as the keys 256. The ultrasonic input unit 258 enables the terminal to sense a sound wave by using a microphone (e.g., a microphone 288) of the hardware 200 through a pen generating an ultrasonic signal, and to identify data. The ultrasonic input unit 258 is capable of wireless recognition. According to an embodiment of the present disclosure, the hardware 200 receives a user input from an external device (e.g., a network, a computer, or a server), which is connected to the communication module 230, through the communication module 230.

The display module 260 includes a panel 262 or a hologram 264. The display module 260 may be, for example, the display module 150 illustrated in FIG. 1. The panel 262 may be, for example, a Liquid Crystal Display (LCD) and an Active Matrix Organic Light Emitting Diode (AM-OLED) display, and the like. The panel 262 may be implemented so as to be, for example, flexible, transparent, or wearable. The panel 262 may include the touch panel 252 and another module. The hologram 264 displays a three-dimensional image in the air by using the interference of light. According to an embodiment of the present disclosure, the display module 260 further includes a control circuit for controlling the panel 262 or the hologram 264.

The interface 270 includes, for example, a High-Definition Multimedia Interface (HDMI) 272, a Universal Serial Bus (USB) 274, a projector 276, and a D-subminiature (D-sub) connector 278. Additionally or alternatively, the interface 270 may include, for example, an SD/Multi-Media Card (MMC) or an interface according to an Infrared Data Association (IrDA) standard.

The audio codec 280 bidirectionally converts between an acoustic (e.g. a voice) signal and an electrical signal. The audio codec 280 converts voice information, which is input to or output from the audio codec 280, through, for example, a speaker 282, a receiver 284, an earphone 286, the microphone 288 or the like.

The camera module 291 captures an image and a moving image. According to an embodiment of the present disclosure, the camera module 291 includes one or more image sensors (e.g., a front lens or a back lens), an Image Signal Processor (ISP), and a flash Light Emitting Diode (LED).

The power management module 295 manages power of the hardware 200. The power management module 295includes, for example, a Power Management Integrated Circuit (PMIC), a charger Integrated Circuit (IC), or a battery gauge.

The PMIC may be mounted to, for example, an IC or an SoC semiconductor. Charging methods may be classified into a wire charging method and a wireless charging method. The charger IC charges a battery, and prevents an overvoltage or an overcurrent state from a charger to the battery. According to an embodiment of the present disclosure, the charger IC includes a charger IC for at least one of the wire charging method and the wireless charging method. Examples of the wireless charging method include a magnetic resonance method, a magnetic induction method, an electromagnetic method, and the like. Additional circuits (e.g., a coil loop, a resonance circuit, a rectifier, etc.) for wireless charging may be added in order to perform wireless charging.

The battery gauge measures, for example, a residual quantity of electrical power of the battery 296, a voltage, a current, or a temperature of the battery 296 during charging. The battery 296 supplies power by generating electricity, and may be, for example, a rechargeable battery.

The indicator 297 indicates certain states of the hardware 200 or a device (e.g., the AP 211) of the hardware 200, for example, a booting state, a message state, a charging state and the like. The motor 298 converts an electrical signal into a mechanical vibration. The processor 210 controls the sensor module 240.

The hardware 200 may include a processing unit (e.g., a GPU) for supporting a TV module. The processing unit for supporting a TV module processes media data according to standards such as, for example, Digital Multimedia Broadcasting (DMB), Digital Video Broadcasting (DVB), media flow, and the like. Each of the above-described elements of the hardware 200, according to an embodiment of the present disclosure, may include one or more components, and the name of the relevant element may change depending on the type of electronic device. The hardware 200, according to an embodiment of the present disclosure, may include at least one of the above-described elements. Some of the above-described elements may be omitted from the hardware 200, or the hardware 200 may further include additional elements. Also, some of the elements of the hardware 200, according to an embodiment of the present disclosure, may be combined into one entity, which may perform functions identical to those of the relevant elements before the combination.

The term "module" used in the present disclosure refers to, for example, a unit including one or more combinations of hardware, software, and firmware. The "module" may be interchangeable with a term, such as "unit," "logic," "logical block," "component," "circuit," or the like. A "module" may be a minimum unit of a component formed as one body or a part thereof. A "module" may be a minimum unit for performing one or more functions or a part thereof. A "module" may be implemented mechanically or electronically. For example, a "module" according to an embodiment of the present disclosure may include at least one of an Application-Specific Integrated Circuit (ASIC), a Field-Programmable Gate Array (FPGA), and a programmable-logic device for performing certain operations which are known or will be developed in the future.

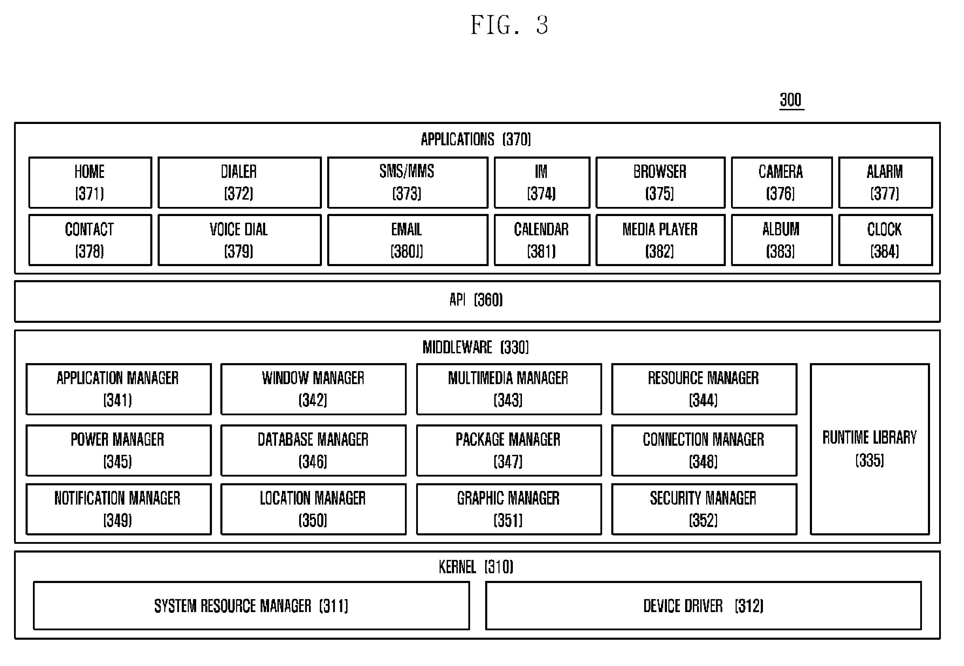

FIG. 3 is a block diagram illustrating a configuration of a programming module 300 according to an embodiment of the present disclosure.

The programming module 300 may be included (or stored) in the electronic device 100 (e.g., the memory 130) illustrated in FIG. 1 or may be included (or stored) in the electronic device 200 (e.g., the memory 230) illustrated in FIG. 2. At least a part of the programming module 300 may be implemented in software, firmware, hardware, or a combination of two or more thereof. The programming module 300 may be implemented in hardware (e.g., the hardware 200), and may include an OS controlling resources related to an electronic device (e.g., the electronic device 100) and/or various applications (e.g., applications 370) executed in the OS. For example, the OS may be Android, iOS, Windows^{®}, Symbian, Tizen™, Bada, and the like.

Referring to FIG. 3, the programming module 300 includes a kernel 310, a middleware 330, an API 360, and/or applications 370.

The kernel 310 (e.g., the kernel 131) includes a system resource manager 311 and/or a device driver 312. The system resource manager 311 may include, for example, a process manager, a memory manager, and a file system manager. The system resource manager 311 performs the control, allocation, recovery, and/or the like of system resources. The device driver 312includes, for example, a display driver, a camera driver, a Bluetooth driver, a shared memory driver, a USB driver, a keypad driver, a Wi-Fi driver, and/or an audio driver. Also, according to an embodiment of the present disclosure, the device driver 312 may include an Inter-Process Communication (IPC) driver.

The middleware 330 includes multiple modules previously implemented so as to provide a function used in common by the applications 370. Also, the middleware 330 provides a function to the applications 370 through the API 360 in order to enable the applications 370 to efficiently use limited system resources within the electronic device. For example, as illustrated in FIG. 3, the middleware 330 (e.g., the middleware 132) includes at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, a security manager 352, and any other suitable and/or similar manager.

The runtime library 335 includes, for example, a library module used by a complier in order to add a new function by using a programming language during the execution of the applications 370. According to an embodiment of the present disclosure, the runtime library 335 performs functions which are related to input and output, the management of a memory, an arithmetic function, and/or the like.

The application manager 341 manages, for example, a life cycle of at least one of the applications 370. The window manager 342 manages Graphical Unser Interface (GUI) resources used on a screen. The multimedia manager 343 detects a format used to reproduce various media files and encodes or decodes a media file through a codec appropriate for the relevant format. The resource manager 344 manages resources, such as source code, memory, storage space, and/or the like of at least one of the applications 370.

The power manager 345 operates together with a Basic Input/Output System (BIOS), manages a battery or power, and provides power information and the like used for an operation. The database manager 346 manages a database in such a manner as to enable the generation, search and/or change of the database to be used by at least one of the applications 370. The package manager 347 manages the installation and/or update of an application distributed in the form of a package file.

The connectivity manager 348 manages a wireless connectivity such as, for example, Wi-Fi and Bluetooth. The notification manager 349 displays or reports, to a user, an event such as an arrival message, an appointment, a proximity alarm, and the like in such a manner as not to disturb the user. The location manager 350 manages location information of the electronic device. The graphic manager 351 manages a graphic effect, which is to be provided to a user, and/or a user interface related to the graphic effect. The security manager 352 provides various security functions used for system security, user authentication, and the like. According to an embodiment of the present disclosure, when the electronic device (e.g., the electronic device 100) has a telephone function, the middleware 330 further includes a telephony manager for managing a voice telephony call function and/or a video telephony call function of the electronic device.

The middleware 330 generates and uses a new middleware module through various functional combinations of the above-described internal element modules. The middleware 330 provides modules generated according to types of OSs in order to provide differentiated functions. Also, the middleware 330 dynamically deletes some of the existing elements, or may add new elements. Accordingly, the middleware 330 may omit some of the elements described in the various embodiments of the present disclosure, may further include other elements, or may replace some of the elements with other elements, each of which performs a similar function but has a different name.

The API 360 (e.g., the API 133) is a set of API programming functions, and may be provided with a different configuration according to an OS. In the case of Android or iOS, for example, one API set may be provided for each platform. In the case of Tizen™, for example, two or more API sets may be provided for each platform.

The applications 370 (e.g., the applications 134) include, for example, a preloaded application and/or a third party application. The applications 370 include, for example, a home application 371, a dialer application 372, a Short Message Service (SMS)/Multimedia Message Service (MMS) application 373, an Instant Message (IM) application 374, a browser application 375, a camera application 376, an alarm application 377, a contact application 378, a voice dial application 379, an electronic mail (e-mail) application 380, a calendar application 381, a media player application 382, an album application 383, a clock application 384, and any other suitable and/or similar application.

At least a part of the programming module 300 may be implemented by instructions stored in a non-transitory computer-readable storage medium. When the instructions are executed by one or more processors (e.g., the one or more processors 210), the one or more processors perform functions corresponding to the instructions. The non-transitory computer-readable storage medium may be, for example, the memory 220. At least a part of the programming module 300 may be implemented (e.g., executed) by, for example, the one or more processors 210. At least a part of the programming module 300 may include, for example, a module, a program, a routine, a set of instructions, and/or a process for performing one or more functions.

Names of the elements of the programming module (e.g., the programming module 300) according to an embodiment of the present disclosure may change depending on the type of OS. The programming module according to an embodiment of the present disclosure may include one or more of the above-described elements. Alternatively, some of the above-described elements may be omitted from the programming module. Alternatively, the programming module may further include additional elements. The operations performed by the programming module or other elements according to an embodiment of the present disclosure may be processed in a sequential method, a parallel method, a repetitive method, or a heuristic method. Also, some of the operations may be omitted, or other operations may be added to the operations.

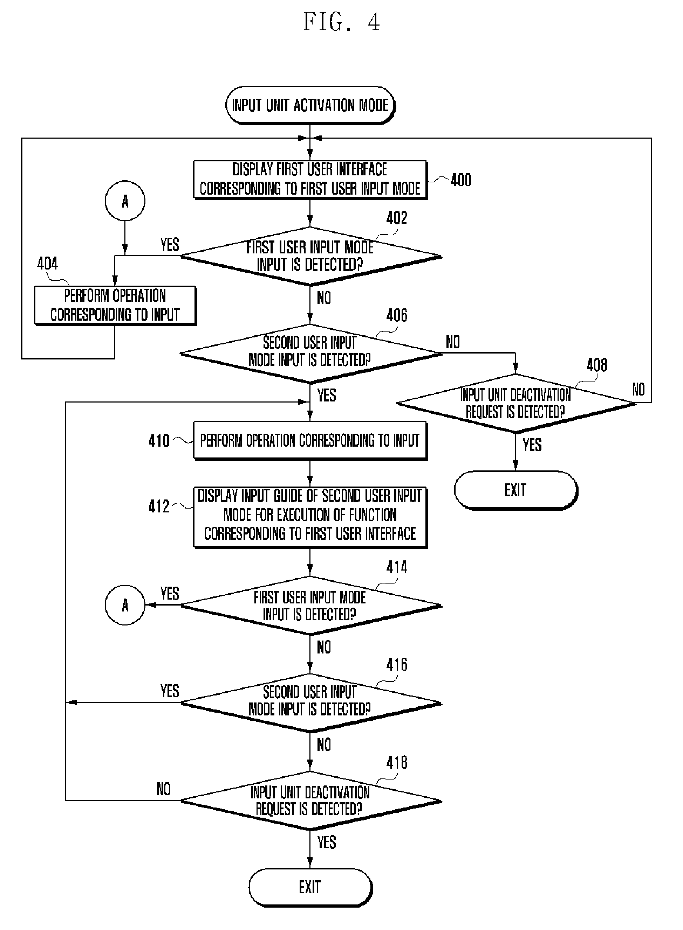

FIG. 4 is a flowchart illustrating a method of providing a user interface adaptively to a user input to an electronic device according to an embodiment of the present disclosure. The description is made with reference to FIGs. 1 and 4. The method of FIG. 4 may be implemented with the configuration FIG. 2. This is because the configuration of FIG. 2 provides the detail of a part of the configuration of FIG. 1. The user input module 140 of FIG. 1 may include the sensor module 240 as well as the user input module 250 of FIG. 2. The user input module of FIG. 1 may include the camera module 291 of FIG 2.

The display module 150 of FIG. 1 may include the display module 260 of FIG. 2. The display module 150 of FIG. 1 also may include at least a part or all of the interface 270.

The configuration of FIG. 3, as well as FIGs. 1 and 2, can also be understood through the description with reference to FIG. 1. An input manager for managing the input device may be included, and the input manager may detect a signal input through a user input module and match the input signal to a certain action, e.g. scroll on the screen and execution of a certain application. A description is provided of the procedure of FIG. 3 with reference to FIG. 1. The embodiment of FIG. 4 is directed to the case where an input unit is in an active mode. This indicates that the user input module 140 is in the active state. It should be noted that all of the operations of FIG. 4 are performed while the user input module 140 is in the active state. Since the flow chart of FIG. 4 is directed to the case where at least two input modes are used, all of the input devices corresponding to the respective input modes are in the activated state.

The processor 120 controls the display module 150 to display the first user interface corresponding to the first user input mode in step 400. In this case, the first user input mode is a default input mode of the electronic device, and the first user interface is the user interface corresponding to the default input mode. If the first user input mode is a key input mode, the first user interface is a screen interface for prompting a user to take an action. For example, the electronic device provides the screen interface to guide the interactions of the respective keys familiar to the user. In a case where the first user input mode is a touch input mode, the first user interface is the screen interface for prompting the user to take an action guiding actions familiar to the user. For example, the screen interface may inform of the reactions corresponding to certain icons or touch areas.

In a state where the first user interface is displayed, the processor 120 determines whether a first user input mode input is detected, a second user input mode input is detected, or an input unit deactivation request is detected, by the user input module 140, in steps 402, 406, and 408.

If it is determined that the first user input mode input is detected by the user input module 140, the method goes to step 404. In step 404, the processor 120 performs an operation corresponding to the input value from the user input module 140. For example, if the first user input mode is the key input mode, the processor 120 performs an operation corresponding to the key selected by the user on the first user interface. If the first user input mode is the touch input mode, the processor 120 performs an operation corresponding to the icon or a touch area to which a touch gesture is made. In this case, after the processor 120 performs step 404, the method returns to step 400.

If it is determined that the input unit deactivation request is detected in step 408, the processor 120 ends the method illustrated in FIG. 4. In this case, the processor 120 releases the display of the first user interface displayed on the screen of the display module 150. Releasing the display indicates that the power supply to the display module 150 is disabled such that nothing is displayed on the screen. If it is necessary to deactivate the input unit, the input unit is configured to be deactivated when there is no input for a predetermined duration or the user requests deactivation of the input unit. If it is requested to deactivate the input unit, the processor 120 deactivates the input and then ends the method of FIG. 4. However, if there is no request for deactivation of the input unit in step 408, the method returns to step 400.

If a second input mode input is detected in step 406, the method goes to step 410. Prior to describing step 410, the second user input mode is described below.

If the first user input mode is the key input mode and/or the touch input mode, the second user input mode may be a hovering, a motion, and/or a gesture input mode. If the second user input mode is supported, various sensors such as a proximity sensor, a camera, and a gesture detection sensor of the electronic device are activated which receive user inputs. In the description below, it is assumed that the second user input mode is the gesture input mode. However, it is obvious to those skilled in the art that hovering and a motion can be understood as types of gestures.

The processor 120 performs an operation based on the information input through the user input module 140 in the second user input mode. If there is an operation of the electronic device which matches a certain gesture and the corresponding gestured is detected, the electronic device performs the matched operation.

After performing the matched operation in step 410, the processor 120 controls the display module 150 to display the second user interface corresponding to the second user input mode in step 412. Descriptions are provided below of the first and second user interfaces displayed by the display module 150 with reference to the accompanying drawings.

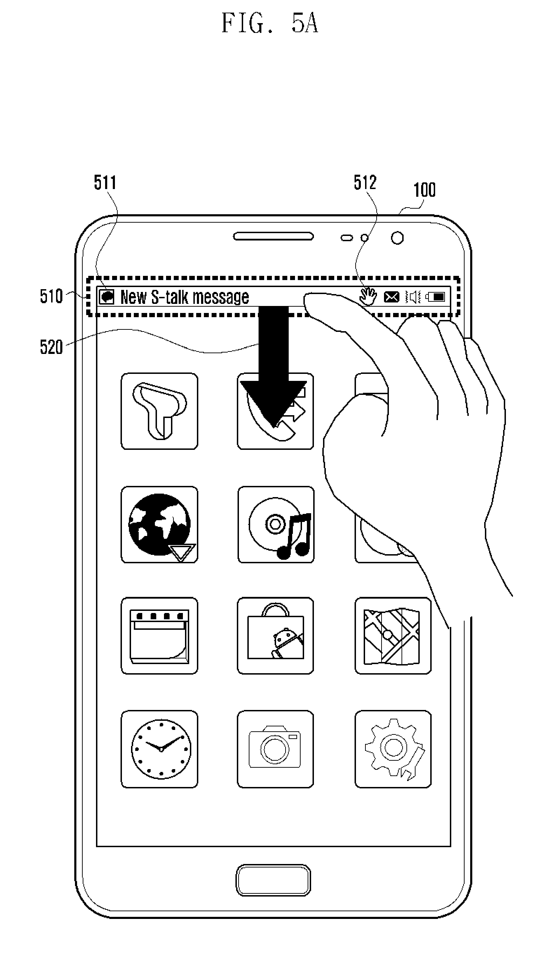

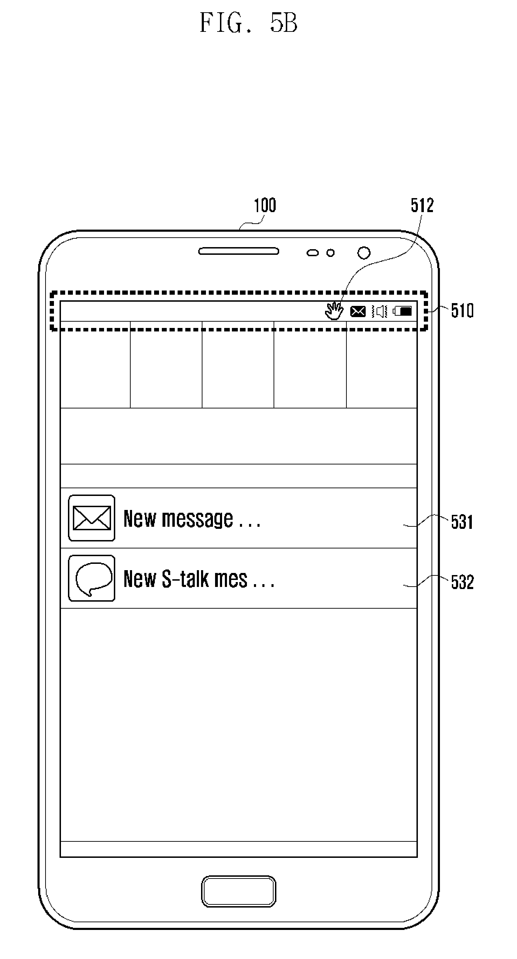

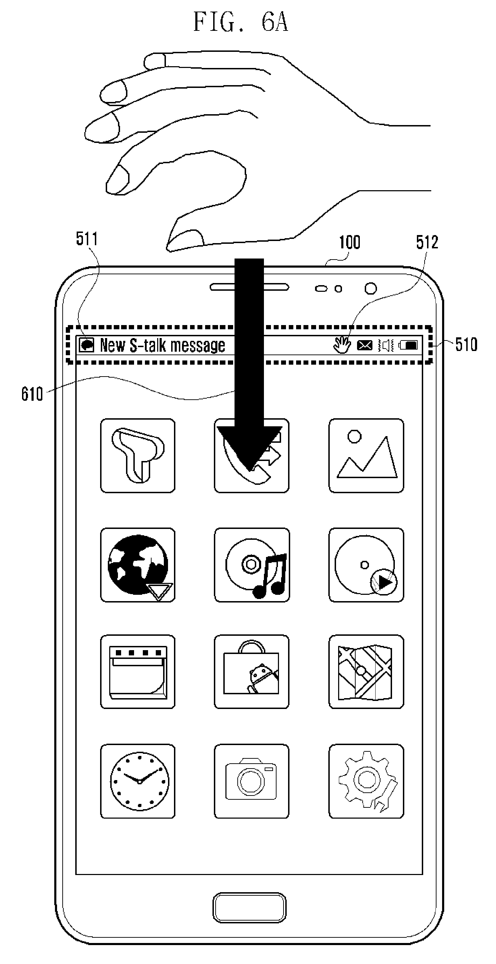

FIGs. 5A and 5B are diagrams illustrating operations of the first user interface according to an embodiment of the present disclosure, and FIGs. 6A to 6D are diagrams illustrating operations of the second user interface according to an embodiment of the present disclosure.

The description below is provided with reference to FIGs. 5A and 5B. The electronic device 100 illustrated in FIGs. 5A and 5B supports the touch input mode as the first user input mode. Accordingly, the user may provide an input with a gesture such as a touch, a touch and drag, and a double touch on a display panel of the display module 150. FIG. 5A is directed to the case where an indication area 510 of the display module 150 indicates the presence of a new text message. According to an embodiment of the present disclosure, the electronic device 100 displays the information on the receipt of a new chat message at a predetermined region of the indication area 510 of the display module 150 as denoted by reference numeral 511. In this state, the user may touch the indication area 510 and drag downward on the screen of the display module 150 to check the content of the indication as denoted by reference numeral 520.

If it is requested to check the content of the indication, the processor 120 changes the screen display as shown in FIG. 5B to show the user the content of the message of which receipt is indicated at the indication area 510. Although the screen display of FIG. 5B also has the indication area 510, indication message 511 disappears because the event notification items 531 and 532 including one corresponding to the indication message 511 are listed below. The indication area 510 shows an icon 512 which indicates that a second user input mode is activated. This second user input mode activation indication icon is also shown in the screen display of FIG. 5A. The second user input mode activation indication icon 512 is an example and may be replaced by another icon that is different in shape and type or hidden.

FIGs. 5A and 5B illustrate typical user interfaces of the electronic device supporting the touch-based input mode.

The second user interface according to an embodiment of the present disclosure is described in detail with reference to FIGs. 6A to 6D hereinafter.

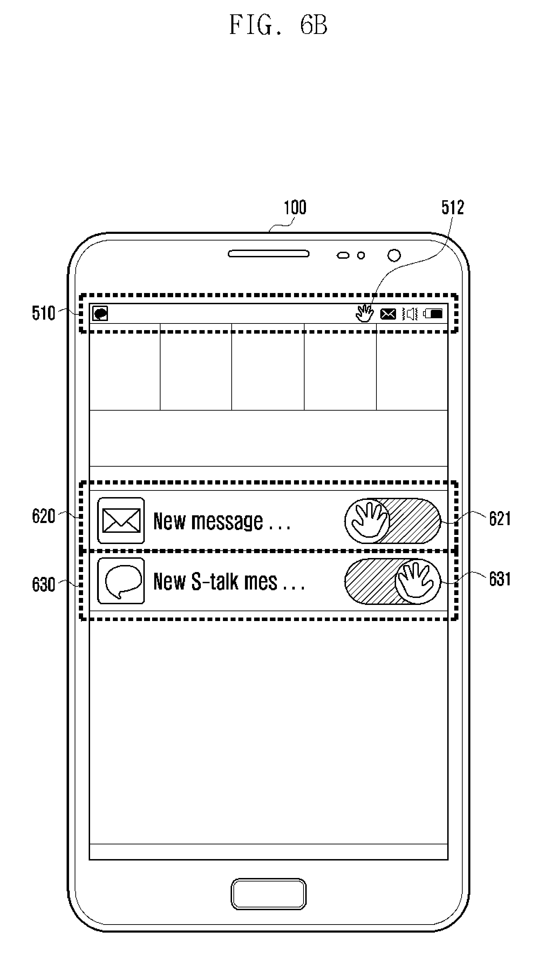

The screen display of FIG. 6A is identical with that of FIG. 5A. The indication area 510 indicates the occurrence of a certain event in various ways with an indication message and/or an icon as in the case of FIG. 5A. Like the screen display of FIG. 5A, the event is indicated by means of an indication message 511. The indication area 510 shows an icon 512 which indicates that a second user input mode is activated. In this state, if the user makes an input suited for the second user input mode as denoted by reference numeral 610, the processor 120 changes the screen display showing the second user interface as illustrated in FIG. 6B. In the following, the description is provided under the assumption that the first user input mode is a touch-based input mode and the second user input mode is a non-touch-based input mode.

The gesture as denoted by reference numeral 610 is made without a touch on the screen of the display module 150 but a predetermined distance above the screen with the user's hand. It is assumed that this non-touch gesture corresponds to the touch and drag gesture as denoted by reference numeral 520 of FIG. 5A.

In response to this gesture, the processor 120 displays the content of the indication on the screen of the display module 150.Then, the processor 120 controls such that the screen display formed in the second user interface according to an embodiment of the present disclosure is displayed on the screen of the display module 150. The screen display format of the second user interface as shown in FIG. 6B notifies of the operations corresponding to certain gestures and motions. As shown in FIG. 6B, the event notification items 620 and 630 are listed on the screen. The event notification items 620 and 630 have the respective second user input mode gesture guides 621 and 631 at their right sides such that the user can make a gesture or motion to input a command.

Unlike FIG. 5B, the event notification items 620 and 630 have the respective second user input mode gesture guides 621 and 631 to notify the user of the gestures for checking the details of the items in FIG. 6B. The second user input mode gesture guides 621 and 631 can be provided in various forms, e.g. as a part of each notification items or as separate items.

As described above, the second user interface may be provided in the form of adding the icons or prompting or guiding the user to make gestures in the first user interface. According to an embodiment of the present disclosure, the second user interface is provided in a custom designed form regardless of the first user interface. In the case of providing the second user interface in the form of adding the icons to the first user interface, all that is required is to design and add a small number of icons and thus it is possible to reduce development time and costs. Since it is not necessary to custom design all of the user interfaces, it is possible to reduce the use of memory 130 of the electronic device 100. Nevertheless, the present disclosure is not limited to either of the two methods described above. However, it is preferred to form the second user interface by modifying the first user interface in various aspects.

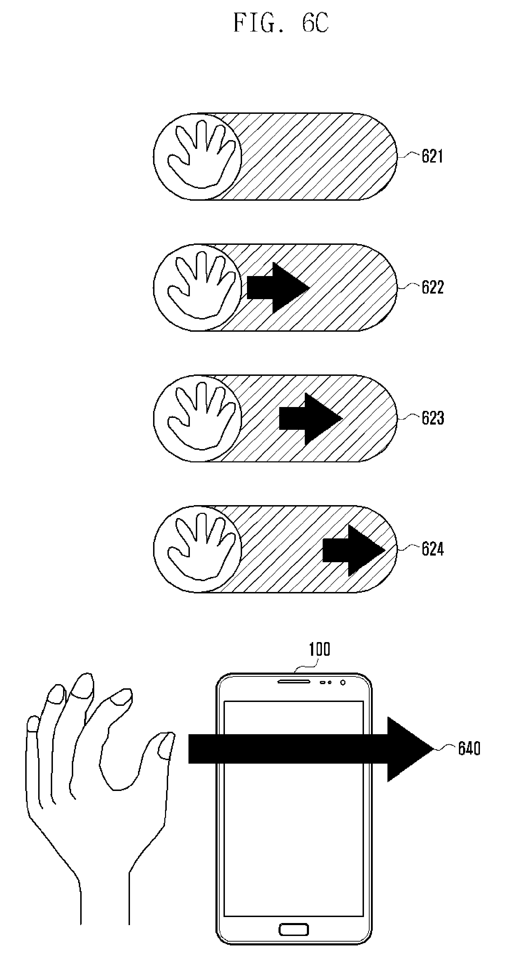

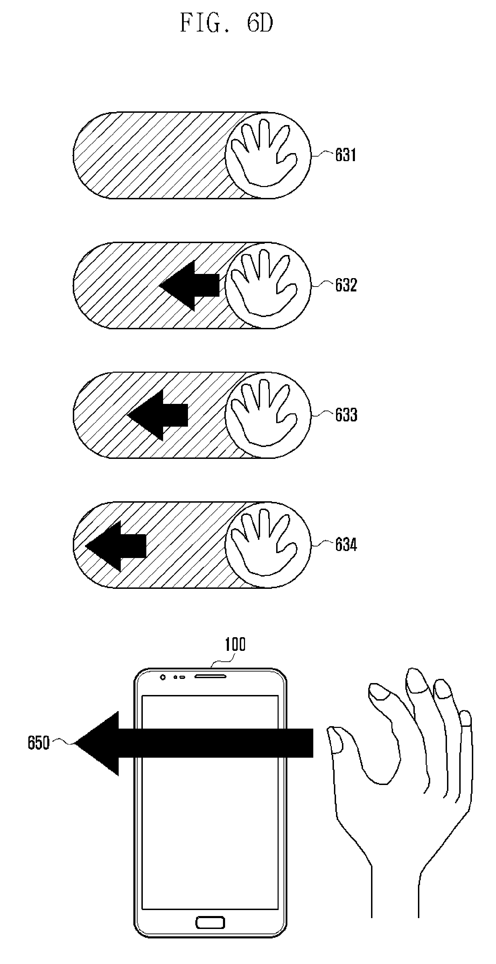

The second user interface may be designed as a still screen display as shown in FIG. 6B or an animated screen display on which objects are moving as time progresses as illustrated in FIGs. 6C and 6D.

The second user interface may be provided in the form of presenting the gesture for opening the new message as shown in FIG. 6C. In FIG. 6C, the second user interface has an animation object. That is, the object changes in shape, i.e. the hand or arrow image moves left, in the order of 621 → 622 → 623 → 624. It is also possible that the object may change color with or without change in shape. In this manner, the electronic device 100 shows a gesture to the user graphically on the screen of the display module 150. The user can check the second user input mode gesture guide visually and/or aurally on the screen of the display module 150 of the electronic device 100 as shown in FIGs. 6B and 6C and make a gesture as denoted by reference numeral 640. In the case of using the auditory method, the electronic device 100 may output an audio guide, e.g. "sweep your hand or arm from left to right on the screen." A description is made of a visual guidance method as an example. However, the audio guidance method can be applied identically.

In the case where the user checks the visual gesture guide for the second user input mode and makes a certain gesture, the electronic device 100 recognizes the gesture as a user input. When a user input corresponding to the second user input mode gesture guide is detected, the electronic device 100 identifies that the user input is identical with that made with the corresponding touch and drag gesture.

If the user makes the gesture as denoted by reference numeral 640, the electronic device 100 recognizes the gesture by means of the user input module 140 and executes a corresponding application or outputs corresponding data on the screen of the display module 150 to the user. The second user interface makes it possible for the user to make an input more intuitively so as to improve the user's convenience.

As shown in FIG. 6D, the second user interface has an animation object which guides a guest for opening the new chat message item of FIG. 6B. The animation object animates as the animation object of FIG. 6C as time progresses. That is, the object changes in shape, i.e. the hand or arrow image moves right, in the order of 631 → 632 → 633 → 634. It is also possible that the object may change color with or without a change in shape. In this manner, the electronic device 100 shows a gesture to the user graphically on the screen of the display module 150. After checking the gesture, the user makes the gesture as denoted by reference numeral 650 above the screen of the display module 150, the input made with this gesture being identical with that made with the touch or the touch and drag onto the corresponding icon.

If the user makes the gesture as denoted by reference numeral 650, the electronic device 100 recognizes the gesture by means of the user input module 140 and executes a corresponding application or outputs corresponding data on the screen of the display module 150 to the user. The second user interface makes it possible for the user to make an input more intuitively so as to improve the user's convenience.

Referring to FIG. 4, the description of the user interface provision method is continued below. As described above, the electronic device 100 provides the first user interface corresponding to the first user input mode in step 400. If an input made in the second user input mode is detected in step 406, the electronic device 100 performs the operation of step 410 and provides the user with the second user interface to continue the second user input mode.

In the state of displaying the second user interface in step 412, the processor 120 determines whether a first user input mode input is detected, a second user input mode input is detected, or an input unit deactivation request is detected, by the user input module 140, in steps 414, 416, and 418.

If it is determined that the first user input mode input is detected in step 414, that is if a key selection, a touch, or a touch and drag gesture is detected, the processor 120 performs a corresponding operation in step 404 and returns the method to step 400. After step 404, the processor 120 controls the display module 150 to display the first user interface.

If it is determined that the input unit deactivation request is detected in step 418, the processor 120 deactivates the user input module 140 and then ends the method illustrated in FIG. 4. Since step 418 is identical to step 408, a detailed description thereof is omitted herein. However, steps 408 and 418 may differ in automatic deactivation time. For example, the automatic deactivation time for the gesture-based input mode in step 418 may be set to a value greater than the automatic deactivation time in step 408 to provide sufficient time for the user to become aware of the second user interface displayed on the screen of the display module 150 and then take action.

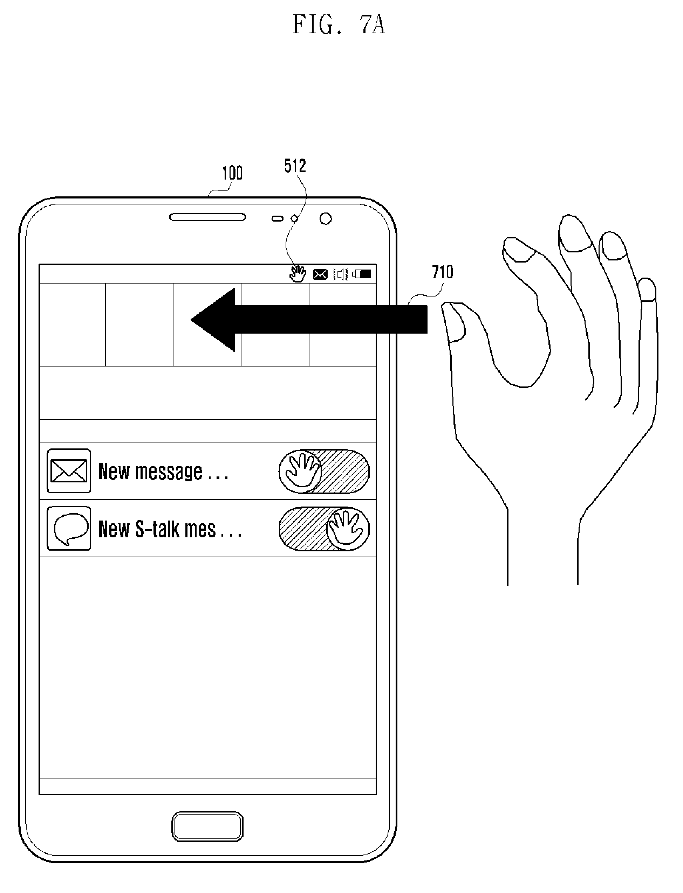

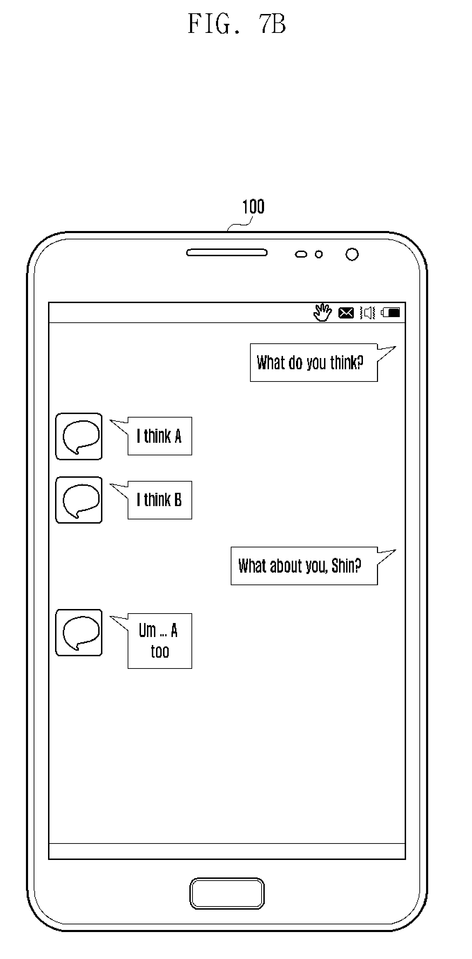

If it is determined that the second user input mode input is detected in step 416, the processor 120 performs the operation corresponding to the input in step 410 and then the method proceeds to step 412. The detailed description thereof is provided below with reference to FIGs. 6A to 6B, 7A, and 7B.

FIGs. 7A and 7B are diagrams illustrating operations of the second user interface in the second user input mode according to an embodiment of the present disclosure.

In step 400, the processor 120 controls such that the second user input mode activation indication icon 512 is displayed to notify the user that the second user input mode input is allowed as shown in FIG. 6A. In step 400, the electronic device 100 is in a state where the display module 150 displays the first user interface corresponding to the first user input mode. If a gesture as denoted by reference numeral 610 is detected, this indicates that a user input is made in the second user input mode in step 406 of FIG. 4. If the second user input mode input is detected, the processor 120 performs operations of steps 410 and 412. As a result, the display module 150 of the electronic device 100 displays the screen as shown in FIG. 6B.

The user makes one of the two guided gestures as shown in FIG. 6B. Suppose that the user makes a gesture to select the new message between the two guided gestures on the screen as denoted by reference numeral 710 of FIG. 7A. In this case, the processor detects the gesture 710 by means of the user input module 140 in step 416. Then the processor 120 performs operations of steps 410 and 412. As a result, the electronic device 100 displays the screen as shown in FIG. 7B.

FIG. 7B shows messages exchanged with a peer user on the screen of the display module 150 of the electronic device 100. As shown in FIG. 7B, if it is not allowed to receive any user input with a gesture, the second user interface is identical with the first user interface. That is, in the case where the first user input mode is supported, the second user interface is provided with the gesture guides for use in the second user input mode and, if the second user input mode is not activated, the second user interface is identical with the first user interface.

FIGs. 5A, 5B, 6A to 6D, and 7A are directed to the case where two types of inputs for the second user interface are available. However, various types of inputs may be supported in association with the second user interface and descriptions thereof are made with reference to the accompanying drawings.

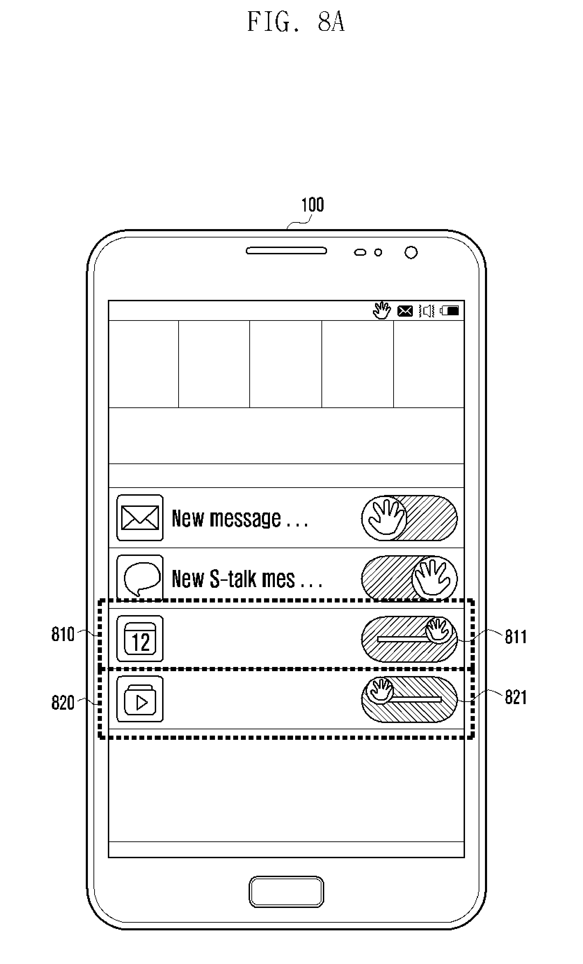

FIGs. 8A to 8C are diagrams illustrating the second user interface supporting four gestures according to an embodiment of the present disclosure.

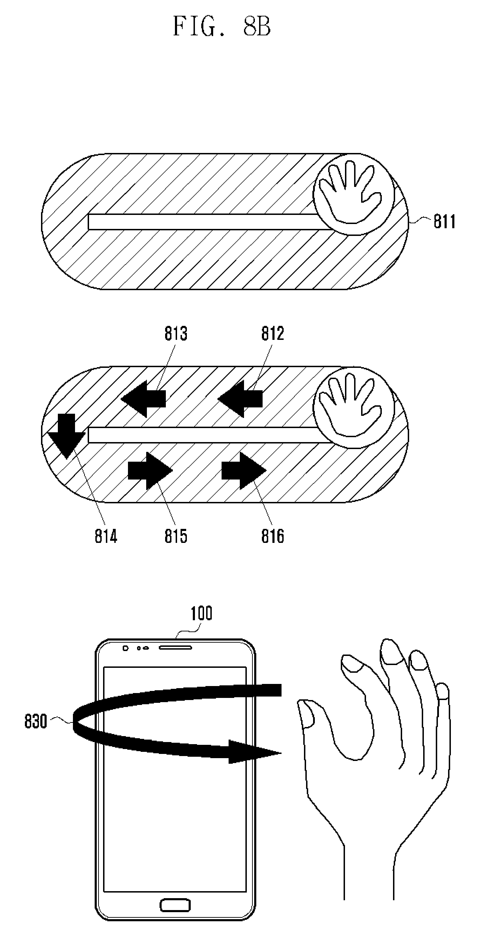

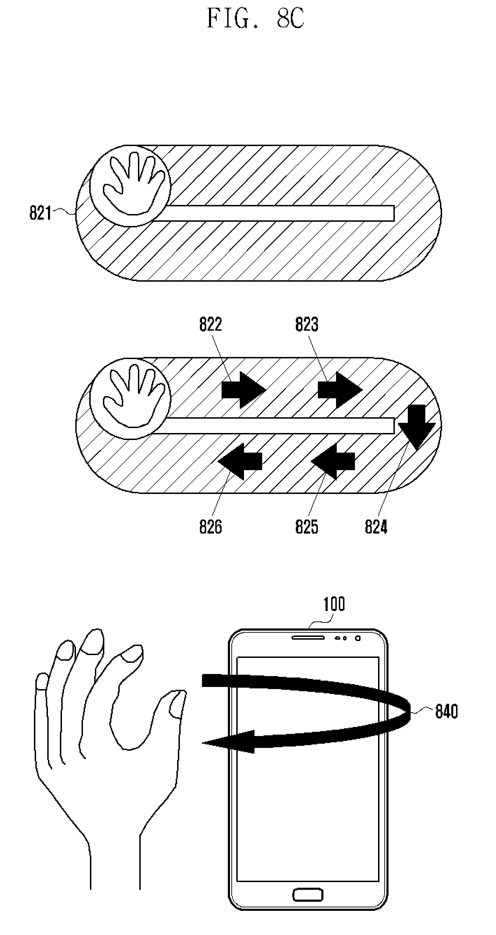

In FIG. 8A, reference numerals are designated for only the new gestures described below but not the two gestures described above. In FIG. 8A, the new event notification items 810 and 820 have new types of second user input mode gesture guides 811 and 821. The second user input mode gesture guides are interchangeably referred to as gesture icons. The second user input mode gesture guides may be designed in the form of still icons as shown in FIG. 8A or animation icons as shown in FIGs. 8B and 8C.

Referring to FIG. 8B, the gesture icon guides the user to take an action as denoted by reference numeral 830 using an object or a part of the human body such as a hand in a predetermined distance range above the electronic device 100. The second user input mode gesture guide may be designed as a still image as denoted by reference numeral 811 or an animation image in which a state changes in the order of 812 → 814 → 815 → 816 (i.e., an arrow changes its position in the order of 812 → 814 → 815 → 816). It is also possible that the arrow changes color so as to show the gesture intuitively. The user may request the electronic device 100 execute the function corresponding to a certain item displayed on the screen of the display module 150, e.g. the function corresponding to the event notification item 810.

FIG. 8C is directed to the case where the motion is made in the opposite direction as compared to FIG. 8B. In FIG. 8C, the second user input mode gesture guide 821 is designed as a still image as denoted by reference numeral 821 or an animation image in which a state changes in the order of 822 → 824 → 825 → 826. It is also possible that the arrow changes color so as to show the gesture intuitively. The user makes a gesture as denoted by reference numeral 840 to request the electronic device 100 to execute a function corresponding to a certain item displayed on the screen of the display module 150, e.g. the function corresponding to the event notification item 820.

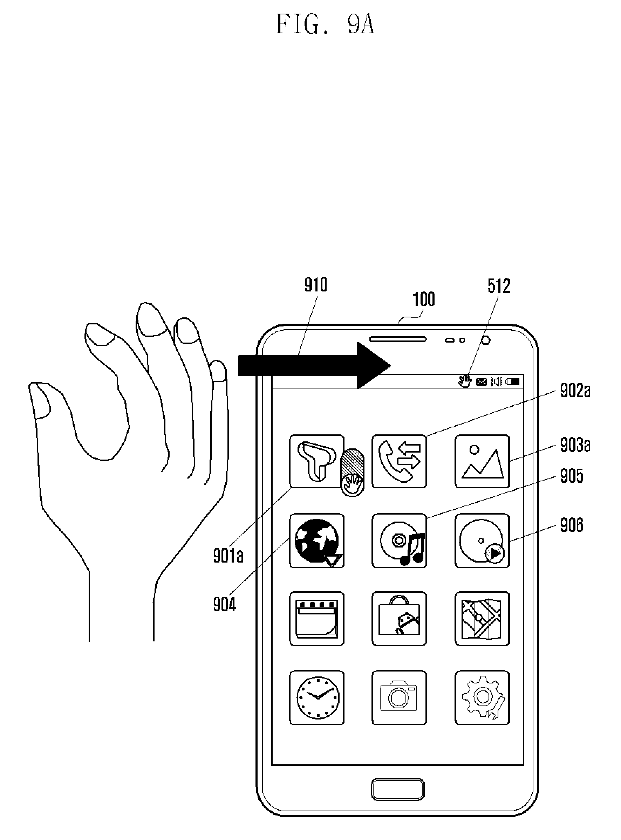

FIGs. 9A to 9D are diagrams illustrating operations of the second user interface with a plurality of selectable items in the second input mode according to an embodiment of the present disclosure.

As shown in FIG. 9A, a plurality icons 901a, 902a, 903, 904, 905, 906, ... are displayed on the screen of the display module 150 of the electronic device. The processor 120 of the electronic device 100 controls such that only the first icon 901a is displayed with the guide icon among the icons 901 a, 902a, 903, 904, 905, 906, .... The guide icon may be provided for one icon as shown in FIG. 9A or per icon. FIG. 9A shows a case where the guide icon is displayed beside the first icon 901 a.

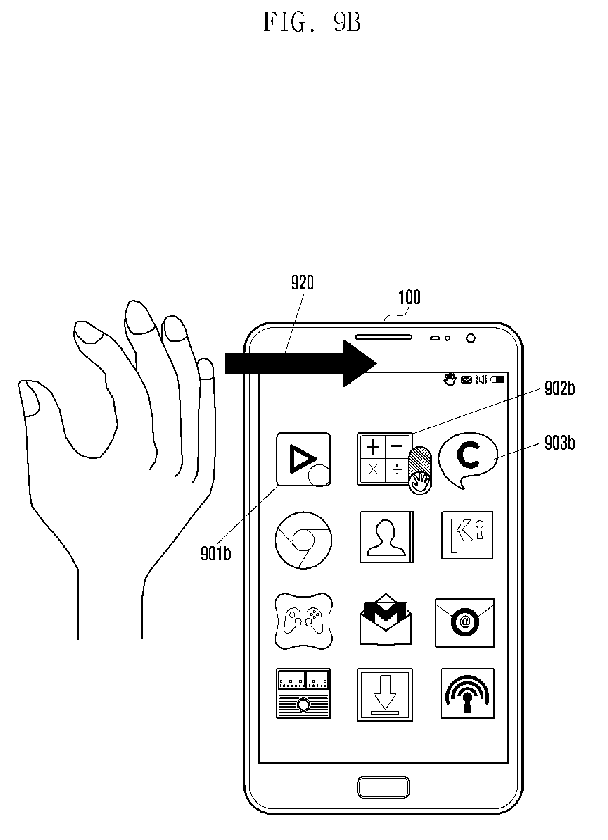

As shown in FIG. 9A, the processor 120 controls the display module 150 to display the guide icon for prompting or guiding the user to make a gesture beside a target icon or a separate second user interface for the same purpose such that the user provides an input in the second user input mode. Suppose that the user makes a gesture as denoted by reference numeral 910 with a part of the user's body or an object. Suppose that the gesture as denoted by reference numeral 910 is a turn of a page when the icons are arranged through two or more pages on the screen of the display module 150 of the electronic device. If this gesture is detected, the processor 120 controls the display module 150 to display the icons other than those shown in FIG. 9A on the screen. The different icons may be displayed on different pages as shown in FIGs. 9A and 9B because the icons are too numerous to display on the screen at once or the user arranges the icons on different pages for convenience sake.

In the case where the screen of the display module 150 is configured to show 12 icons, all of the 12 or more icons cannot be displayed on the screen at once. Suppose that the screen is composed of a plurality of screen pages when the number of icons is greater than that which can be displayed at once. Each page can show 12 icons. The maximum number of icons that can be displayed at once varies depending on the size of the screen of the display module 150 and the size of the icons.

Suppose that there are 13 or more icons and one page shows up to 12 icons and each page displays the maximum number of icons to be displayed at once. In order to check the 13^{th} or subsequent icons in the state that the first page is displayed, it is necessary to turn the page to the next page. This operation is executed in response to the gesture as denoted by reference numeral 910 of FIG. 9A. In this case, the sweeping gesture 910 is not the case of executing a certain application or file represented by an icon.

As shown in FIG. 9A, the gesture of turning the page is not guided with any guide icon. Certain gestures, e.g. a gesture which the user understands intuitively or is likely to memorize, may not be guided with the second user input mode gesture guide (e.g. guide icon).

A description is provided below of the case where the user makes the sweeping gesture 910 to turn the page with reference to FIG. 9B. It is assumed that FIG. 9B shows the next screen page having the icons that are different from those of the screen page of FIG. 9A.

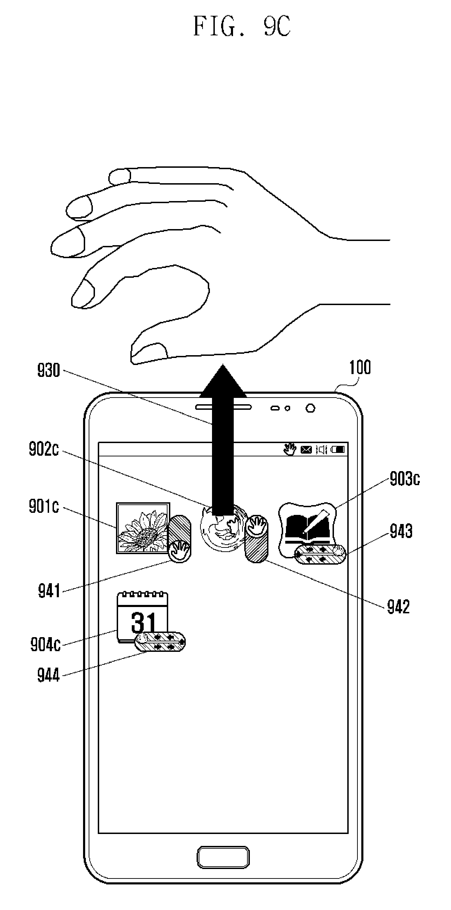

The screen of FIG. 9B shows the second user interface having the guide icon beside the second icon 902b among a plurality of icons 901a, 902b, 903b, .... The icons 901 a, 902b, 903b, ... are different from the icons on the screen of FIG. 9A. If the user makes a gesture as denoted by reference numeral 920 with a part of the user's body or an object in the state where the guide icon is provided beside the second icon 920b, the processor 120 controls the display module 150 to display a screen as shown in FIG. 9C. This operation is performed in the same manner as shifting from the page screen of FIG. 9A to the page screen of FIG. 9B.

As described with reference to FIGs. 9A and 9B, the second user input mode gesture guides for executing the functions corresponding to the first user interface can be reused when a page is turned to another page. In FIG. 9A, the second user input mode gesture guide (e.g. guide icon) for guiding an upward gesture is displayed beside the first icon 901a. In FIG. 9B, the second user input mode gesture guide (e.g. guide icon) for guiding an upward gesture is displayed beside the second icon 902b. Assuming that FIG. 9A shows the first screen page and FIG. 9B shows the second screen page, the second user input mode gesture guide for execution of a function corresponding to the first user interface is reused.

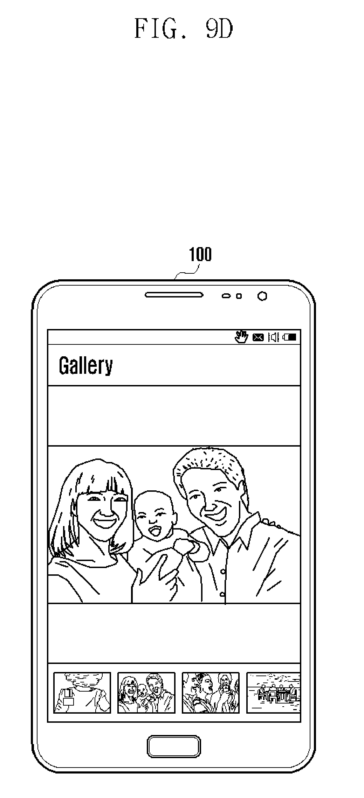

Referring to FIG. 9C, all of the icons 901 c, 902c, 903c, and 904c are displayed with the second user input mode gesture guides 941, 942, 943, and 944, unlike the cases of FIGs. 9A and 9B in which one icon has the second user input mode gesture guide. Although the screen pages of FIGs. 9A and 9B have only one icon with the second user input mode gesture guide, all of the icons may be displayed with the second user input mode gesture guide as shown in FIG. 9C. If the user makes the gesture as denoted by reference numeral 930 in the state where all of the icons have the second user input mode gesture guide as shown in FIG. 9C, the processor 120 determines a request for execution of a function corresponding to the icon 910c is input. Accordingly, the processor 120 executes the corresponding function. FIG. 9C is directed to the case where the gesture is made on the icon of a photo folder. If the execution request is made on the photo folder, the processor 120 executes the operation predetermined for the photo folder with the execution screen as shown in FIG. 9D.

In FIG. 9D, if there is no need to guide a second user input mode gesture, the second user interface is identical with the first user interface or omitted.

As described above, the user interface method and apparatus of the present disclosure is advantageous in terms of improving user convenience by providing a user with an input guide for a previous input mode when providing a user interface in an electronic device supporting two or more input modes.

As described above, the user interface method and apparatus of the present disclosure is advantageous in that a user can use multiple input modes with the assistance of a user interface adaptive to an input mode. Also, the user interface method and apparatus of the present disclosure is advantageous in that a user can learn the operation mechanism of a user interface intuitively so as to make an input easily and change the input mode easily. Also, the user interface method and apparatus of the present disclosure is advantageous in that the user interface is adaptive to an input mode selected by a user so as to improve the user's convenience. Also, the user interface method and apparatus of the present disclosure is advantageous in terms of facilitating implementation of the user interface.

While the present disclosure has been shown and described with reference to certain embodiment thereof, it will be understood by those skilled in the art that various changes in form and details may be made therein without departing from the scope and spirit of the present disclosure as defined by the appended claims and their equivalents.

## Claims

1. A method of providing a user interface corresponding to a user input in an electronic device, the method comprising:
displaying at least one first user interface corresponding to a first user input mode; and
displaying, when a user input of a second user input mode is detected, at least one input guide for executing a function corresponding to the at least one first user interface in the second user input mode.

2. The method of claim 1, wherein the first user input mode is one of a key input mode and a touch input mode, and the second user input mode is one of a hovering input mode, a motion input mode, and a gesture input mode.

3. The method of claim 1, wherein the at least one input guide changes shape or color as time progresses to guide the second user input mode.

4. The method of claim 1, wherein one of the at least one input guide corresponds to one of the at least one first user interface.

5. The method of claim 4, wherein each of the at least one input guide is displayed along with the at least one first user interface.

6. The method of claim 1, wherein the at least one input guide is reused in screen pages.

7. The method of claim 1, further comprising:
executing, when an input of the first user input mode is detected in a state where the at least one input guide is displayed, a function corresponding to the input of the first user input mode; and
displaying the at least one first user interface corresponding to the first user input mode.

8. The method of claim 1, further comprising indicating, when the second user input mode is activated, activation of the second user input mode.

9. An electronic device for providing a user interface corresponding to a user input, the electronic device comprising:
a user input module configured to receive a user input in a first user input mode and a second user input mode;
a display module configured to display at least one first user interface corresponding to the first user input mode and at least one input guide corresponding to a second user input mode;
a memory configured to store the at least one first user interface, the at least one input guide, and an operation program of the electronic device; and
a processor configured to control the display module to display, when a user input of a second user input mode is detected in a state where the first user input mode is displayed on a screen of the display module, the at least one input guide for executing a function corresponding to the at least one first user interface in the second user input mode.

10. The electronic device of claim 9, wherein the first user input mode is one of a key input mode and a touch input mode, and the second user input mode is one of a hovering input mode, a motion input mode, and a gesture input mode.

11. The electronic device of claim 9, wherein the processor is further configured to control the display module to display the at least one input guide changing in shape or color as time progresses to guide the second user input mode.

12. The electronic device of claim 9, wherein the processor is further configured to control the display module to display one of the at least one input guide corresponding to one of the at least one first user interface.

13. The electronic device of claim 12, wherein the processor is further configured to control the display module to display the at least one input guide along with the at least one first user interface.

14. The electronic device of claim 9, wherein the processor is further configured to control the display module to display the at least one input guide to be reused in screen pages.

15. The electronic device of claim 9, wherein the processor is further configured to execute, when an input of the first user input mode is detected in a state where the at least one input guide is displayed, a function corresponding to the input of the first user input mode and control the display module to display the at least one first user interface corresponding to the first user input mode.
